Europäisches Patentamt

European Patent Office

Office européen des brevets

(11) Veröffentlichungsnummer: **0 192 079**
**A2**

# (12) EUROPÄISCHE PATENTANMELDUNG

(21) Anmeldenummer: 86100930.6

(22) Anmeldetag: 24.01.86

(51) Int. Cl.⁴: **H04L 11/00**

(30) Priorität: 20.02.85 DE 3505868

(43) Veröffentlichungstag der Anmeldung:
27.08.86 Patentblatt 86/35

(84) Benannte Vertragsstaaten:
AT DE IT NL

(71) Anmelder: Siemens Aktiengesellschaft Berlin und München
Wittelsbacherplatz 2
D-8000 München 2(DE)

(72) Erfinder: Franz, Dietmar, Dipl.-Ing. (FH)
Edelweissstrasse 66
D-8039 Puchheim(DE)

(54) Verfahren zum Übertragen von Uhrzeit- und/oder Datumsangaben.

(57) Bei einer aus einer Fernschreib- und Datenvermittlungsanlage (EDS) und einer mit dieser über eine Anzahl von Übertragngskanälen (K1 bis Kn) verbundenen Signalbehandlungseinrichtung (SBE) bestehenden Anordnung ist vorgesehen, daß in der Fernschreib- und Datenvermittlungsanlage bereitstehende Uhrzeit- und/oder Datumsangaben über einen ggf. von den Übertragungskanälen verschiedenen Sonderkanal (USART) im Zuge wenigstens einer gesonderten Verbindung zu der Signalbehandlungseinrichtung hin übertragen werden.

Verfahren zum Übertragen von Uhrzeit- und/oder Datumsangaben

Die Erfindung betrifft ein Verfahren zum Übertragen von in einer Fernschreib- und Datenvermittlungsanlage bereitstehenden Uhrzeit- und/oder Datumsangaben zu einer mit dieser über eine Anzahl von Übertragungskanälen verbundenen Signalbehandlungseinrichtung hin.

Es ist bereits ein Verfahren zum Abgeben von Zusatzinformationen, insbesondere von Datums- und Uhrzeitangaben, in Verbindung mit über eine Datenvermittlungsstelle zu übertragenden Nachrichtensignalen bekannt (DE-OS 32 06 796). Bei diesem bekannten Verfahren ist in die Übertragung von Zusatzinformationen und Nachrichtensignalen ein mit der Datenvermittlungsstelle verbundener Signalumsetzer einbezogen. Dieser Signalumsetzer ermöglicht eine Übertragung von Nachrichtensignalen zwischen Fernschreib- Teilnehmerstellen und Teletex- Teilnehmerstellen - (Bürofernschreib- Teilnehmerstellen). Die Abgabe von Zusatzinformationen, z.B. von Datums- und Uhrzeitangaben, erfolgt nun in der Weise, daß nach einer Belegung des Signalumsetzers von einer Fernschreib- Teilnehmerstelle her mit jedem Versuch des Aufbaus einer Verbindung von dem Signalumsetzer zu einer Teletex- Teilnehmerstelle hin die entsprechenden Zusatzinformationen von der Datenvermittlungsstelle zu dem Signalumsetzer hin übertragen werden. Diese Zusatzinformationen werden dann zusammen mit den umgesetzten Nachrichtensignalen nach einem erfolgten Aufbau einer Verbindung zwischen dem Signalumsetzer und der Teletex- Teilnehmerstelle an diese abgegeben. Damit wird zwar erreicht, daß z. B. für das Abgeben von Datums- und Uhrzeitangaben als Zusatzinformationen keine Datum- und Uhrzeit bereitstellende Einrichtungen in dem Signalumsetzer erforderlich sind und somit eventuell notwendige Synchronisiervorgänge für derartige Einrichtungen entfallen können.Die vorgesehene Übertragung der Zusatzinformationen von der Datenvermittlungsstelle her bringt jedoch eine Erhöhung der Belegungsdauer der Übertragungswege zwischen der Datenvermittlungsstelle und dem Signalumsetzer mit sich. Eine derartige erhöhte Belegungsdauer ist aber zuweilen unerwünscht.

Es ist nun Aufgabe der vorliegenden Erfindung, einen Weg zu zeigen, wie bei einem Verfahren der eingangs genannten Art Uhrzeit- und/oder Datumsangaben ohne Erhöhung der Belegungsdauer der einzelnen Übertragungskanäle zu der Signalbehandlungseinrichtung hin übertragen werden können.

Gelöst wird die vorstehend aufgezeigte Aufgabe bei einem Verfahren der eingangs genannten Art erfindungsgemäß dadurch, daß die Uhrzeit- und/oder Datumsangaben über einen ggf. von den Übertragungskanälen verschiedenen Sonderkanal im Zuge wenigstens einer gesonderten Verbindung zu der Signalbehandlungseinrichtung hin übertragen werden. Dies bringt den Vorteil mit sich, daß eine aufwendige Synchronisierung der Uhrzeit- und/oder Datumsangaben bereitstellenden Einrichtungen in der Fernschreib-und Datenvermittlungsanlage und in der Signalbehandlungseinrichtung entfallen kann. Nach der Übernahme der Uhrzeit- und/oder Datumsangaben in die Signalbehandlungseinrichtung können diese in einem vorgegebenen Taktraster fortgeschaltet werden. Die Übertragung von Uhrzeit- und /oder Datumsangaben im Zuge wenigstens einer gesonderten Verbindung bringt weiterhin den Vorteil mit sich, daß hierfür in der Fernschreib- und Datenvermittlungsanlage lediglich auch für die Übertragung von zu behandelnden Datensignalen erforderliche Steuerungsvorgänge zu aktivieren sind. Eine Aktivierung von speziellen Steuerungsvorgängen ist somit nicht erforderlich.

Eine vorteilhafte Ausgestaltung des Verfahrens gemäß der vorliegenden Erfindung sieht vor, daß für eine Aktualisierung der in der Signalbehandlungseinrichtung bereitstehenden Uhrzeit- und/oder Datumsangaben von dieser Signalbehandlungseinrichtung her eine gesonderte Verbindung über den Sonderkanal aufgebaut wird. Auf diese Weise ist es möglich, beispielsweise bei einer in der Signalbehandlungseinrichtung aufgetretenen Störung eine Aktualisierung der Uhrzeit- und/oder Datumsangaben herbeizuführen.

Es kann aber auch so vorgegangen werden, daß für die Abgabe von Uhrzeit- und/oder Datumsangaben von der Fernschreib- und Datenvermittlungsanlage her in vorgegebenen Zeitabständen gesonderte Verbindungen über den Sonderkanal aufgebaut werden. Dies ist insbesondere für eine routinemäßige Synchronisierung der genannten Angaben in der Fernschreib- und Datenvermittlungsanlage und in der Signalbehandlungseinrichtung vorteilhaft anwendbar.

Uhrzeit- und/oder Datumsangaben können über den Sonderkanal jeweils entweder während der Datenübertragungsphase einer gesonderten Verbindung oder in Form eines Dienstsignals im Zuge des Verbindungsaufbaus einer solchen gesonderten Verbindung übertragen werden. Zweckmäßigerweise wird für die Übertragung dieser Angaben die Datenübertragungsphase immer dann gewählt, wenn die Angaben jeweils in Form einer größeren Datenmenge zu übertragen sind. Sind dagegen als Uhrzeit- und/oder Datumsangaben lediglich geringe Daten zu übertragen, so ist es vorteilhaft, diese als Dienstsignale im Zuge des Verbindungsaufbaus zu übertragen. Auf diese Weise wird die Belegung des Sonderkanals für die einzelnen Verbindungen reduziert, da eine Verbindung bereits vor Eintritt in die Datenübertragungsphase wieder ausgelöst werden kann.

Im folgenden wird die Erfindung anhand einer Zeichnung beispielsweise näher beschrieben.

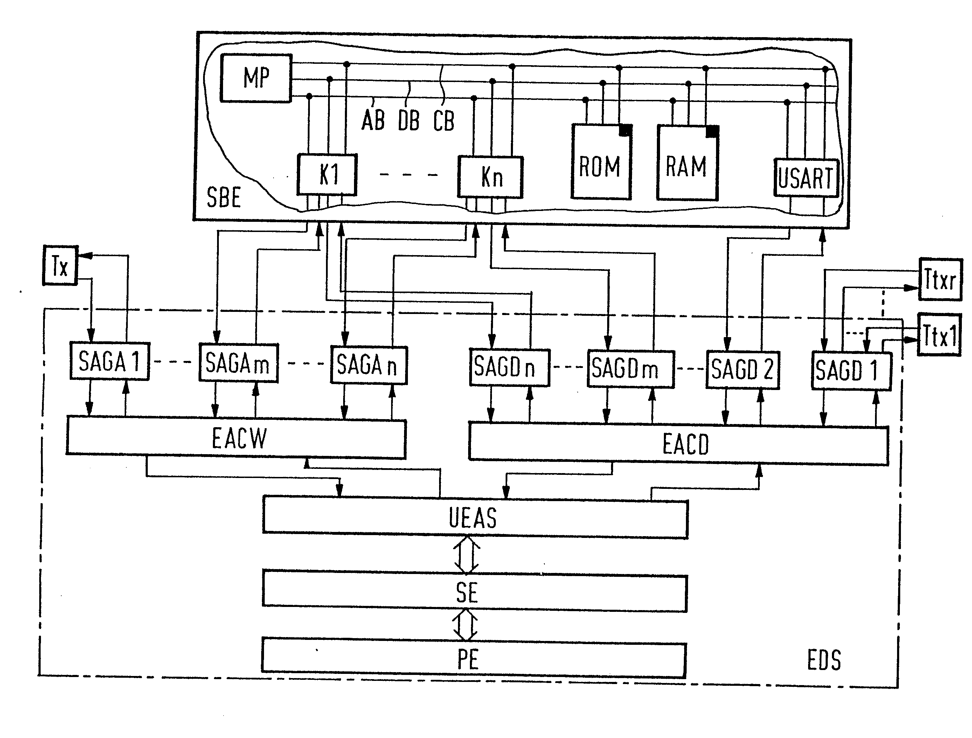

In der Zeichnung ist eine Fernschreib- und Datenvermittlungsanlage EDS dargestellt, welche allgemein zur Übertragung von Datensignalen dient. Unter diese Datensignale fallen dabei auch beispielsweise Fernschreibzeichen oder Sprachsignale in digital kodierter Form. Von der Fernschreib- und Datenvermittlungsanlage sind zwei verschiedene Gruppen von Anschlußschaltungen dargestellt. Zu einer ersten Gruppe gehören dabei die Anschlußschaltungen SAGA1 bis SAGAn, von denen in der Zeichnung lediglich die Anschlußschaltungen SAGA1, SAGAm und SAGAn dargestellt sind. Diese Anschlußschaltungen dienen dazu, digitale Datensignale polaritätswechselweise zu verarbeiten. Auf den mit ihnen verbundenen Übertragungsleitungen ist beispielsweise eine Signalübertragung unter Ausnutzung des internationalen Telegrafenalphabets Nr. 2 mit einer für Telexübertragungen üblichen Datenübertragungsrate von 50 Bd möglich. Damit sind beispielsweise an diese Anschlußschaltungen übliche Fernschreib- bzw. Telex-Endgeräte anschließbar. In der Zeichnung ist ein mit Tx bezeichnetes Telex-Endgerät mit der Anschlußschaltung SAGA1 verbunden.

Die zweite Gruppe von Anschlußschaltungen umfaßt die Anschlußschaltungen SAGD1 bis SAGDn. Von diesen sind in der Zeichnung lediglich die Anschlußschaltungen SAGD1, SAGD2, SAGDm und SAGDn dargestellt. Diese Anschlußschaltungen verarbeiten digitale Datensignale in Form von Bitgruppen, die auch als Envelopes bezeichnet werden. Beispielsweise können sie digitale Datensignale

entsprechend dem internationalen Alphabet IA Nr. 5 mit einer Datenübertragungsrate von beispielsweise 2400 bit/s abgeben und aufnehmen. Es handelt sich dabei um eine synchrone Datenübertragung.

An die gerade genannten Anschlußschaltungen sind beispielsweise sogenannte Bürofernschreibstationen anschließbar, die auch als Teletex-Endgeräte bezeichnet werden. In der Zeichnung sind zwei mit Ttx1 und Ttxr bezeichnete Teletex-Endgeräte an die Anschlußschaltung SAGD1 angeschlossen.

Bezüglich der zuvor genannten Anschlußschaltungen sei darauf hingewiesen, daß diese jeweils mit einer Vielzahl von Übertragungsleitungen (Teilnehmerleitungen) verbunden sind, an die Telex-Endgeräte bzw. Teletex-Endgeräte anschließbar sind. Die in der Zeichnung mit Tx bzw. mit Ttx1 und Ttxr bezeichneten Endgeräte sind demzufolge stellvertretend für eine Vielzahl von Endgeräten angegeben. Darüber hinaus kann es sich bei den Übertragungsleitungen aber auch um sogenannte Amtsverbindungsleitungen handeln, über welche jeweils zwei Fernschreib- und Datenvermittlungsanlagen miteinander in Verbindung stehen.

Neben den zuvor genannten Anschlußschaltungen sind als Schaltungsteile der Fernschreib- und Datenvermittlungsanlage EDS noch Eingabe-/Ausgabe-Codewandler EACW und EACD, eine Übertragungsablaufsteuerung UEAS, eine Speichereinheit SE und schließlich eine Programmsteuereinheit PE angegeben. Auf das Zusammenwirken dieser Schaltungsteile wird hier nicht näher eingegangen, da dieses bereits hinlänglich bekannt ist (siehe beispielsweise "Siemens-Zeitschrift", Heft 2, 1977, Seiten 82 bis 87).

Mit der Fernschreib- und Datenvermittlungsanlage EDS ist schließlich noch eine Signalbehandlungseinrichtung SBE verbunden. Diese Signalbehandlungseinrichtung dient zur Behandlung von über die Fernschreib- und Datenvermittlungsanlage zu übertragenden Datensignalen. Eine Behandlung von Datensignalen kann dabei beispielsweise in einer Datenübertragungsprozedur- und/oder Datenformatumsetzung, in einer Weiterleitung der Datensignale an eine vorgegebene Anzahl von Teilnehmerstellen oder auch in einer Zwischenspeicherung der Datensignale bis zu deren Abruf durch beispielsweise eine autorisierte Person bestehen. Dabei können die Weiterleitung und die Zwischenspeicherung von Datensignalen mit einer Prozedur- und/oder Formatumsetzung gekoppelt sein. Signalbehandlungseinrichtungen der gerade genannten Art werden auch allgemein als Sende- und Empfangshilfen bezeichnet. Beispiele für derartige Signalbehandlungseinrichtungen sind Signalumsetzer, Rundsendeeinrichtungen, welche an eine Mehrzahl von Teilnehmerstellen weiterzuleitende Datensignale zugeführt erhalten, und Einrichtungen für den elektronischen Briefdienst (Mail-Box), in welchen von autorisierten Personen abrufbare Nachrichten (Datensignale) zwischengespeichert sind.

Die Signalbehandlungseinrichtung SBE stellt ein Mikroprozessorsystem dar. Zu diesem System gehört ein Mikroprozessor MP, welcher mit weiteren zu dem System gehörenden Einrichtungen über ein Busleitungssystem verbunden ist. Dieses Busleitungssystem besteht dabei aus einem Adreßbus AB, einem Datenbus DB und einem Steuerbus CB. Mit diesem Busleitungssystem ist u.a. eine aus einem Festwertspeicher RAM für die Speicherung der für den Betrieb des Mikroprozessors erforderlichen Befehlsfolge und einem Arbeitsspeicher RAM mit wahlfreiem Zugriff (Schreib-/Lese-Speicher) bestehende Speicheranordnung verbunden.

Außerdem sind mit dem Busleitungssystem der Signalbehandlungseinrichtung SBE Übertragungskanäle K1 bis Kn verbunden Von diesen sind in der Zeichnung lediglich die Übertragungskanäle K1 und Kn dargestellt. Diese Übertragungskanäle dienen sowohl zur Übertragung von zu behandelnden Datensignalen zu der Signalbehandlungseinrichtung hin als auch zur Abgabe von in dieser behandelten Datensignalen an die Fernschreib- und Datenvermittlungsanlage. Intern weisen diese Übertragungskanäle im wesentlichen Schnittstellenschaltungen für den Anschluß an die bereits oben erwähnten Anschlußschaltungen der Fernschreib- und Datenvermittlungsanlage EDS auf. Es können dabei beispielsweise Schnittstellenschaltungen verwendet werden, wie sie bereits in der Patentschrift ...(P 34 31 762.7) beschrieben worden sind.

Jeder der Übertragungskanäle ist sowohl mit einer zu der ersten Gruppe von Anschlußschaltungen (SAGA1 bis SAGAn) gehörenden Anschlußschaltung als auch mit einer zu der zweiten Gruppe von Anschlußschaltungen (SAGD1 bis SAGDn) gehörenden Anschlußschaltung der Fernschreib- und Datenvermittlungsanlage verbunden. In der Zeichnung ist der Übertragungskanal K1 an die Anschlußschaltungen SAGAm und SAGDn angeschlossen. Der Übertragungskanal Kn ist dagegen mit den Anschlußschaltungen SAGAn und SAGDm verbunden.

Wie bereits erwähnt, sind die Übertragungskanäle K1 bis Kn über das interne Busleitungssystem der Signalbehandlungseinrichtung SBE mit dem Mikroprozessor MP verbunden. Über dieses Busleitungssystem erfolgt die Signalübertragung von bzw. zu dem Mikroprozessor hin. Mit dem Busleitungssystem ist schließlich noch eine Schnittstellenschaltung USART verbunden, über die ein bidirektional betriebener Sonderkanal zu der Fernschreib- und Datenvermittlungsanlage EDS hin verläuft. In dieser verläuft der Sonderkanal über die Anschlußschaltung SAGD2.

Nachdem zuvor der Aufbau der in der Zeichnung dargestellten Schaltungsanordnung erläutert worden ist, sei nunmehr zunächst auf die Arbeitsweise der Signalbehandlungseinrichtung eingegangen, ehe das Verfahren gemäß der vorliegenden Erfindung näher beschrieben wird.

Es sei nun zunächst angenommen, daß es sich bei der Signalbehandlungseinrichtung SBE um einen Signalumsetzer handelt, welcher eine Übertragung von Datensignalen zwischen Teletex-Endgeräten und Telex-Endgeräten ermöglicht. Weiterhin sei angenommen, daß Datensignalen, die von einem Telex-Endgerät zu einem Teletex-Endgerät zu übertragen sind, Uhrzeit- und/oder Datumsangaben von den Vermittlungseinrichtungen voranzustellen sind. Bei den Vermittlungseinrichtungen handelt es sich im vorliegenden Fall um die Fernschreib-Datenvermittlungsanlage EDS und die Signalbehandlungseinrichtung SBE. Auf eine Übertragung von Datensignalen in umgekehrter Richtung, nämlich auf die Übertragung von Datensignalen von einem Teletex-Endgerät zu einem Telex-Endgerät, wird im folgenden nicht näher eingegangen, da Teletex-Endgeräte im allgemeinen bei einer bestehenden Verbindung den eigentlichen Datensignalen bereits Uhrzeit- und Datumsangaben selbst voranstellen, nachdem diese die Uhrzeit- und Datumsangaben im Zuge des üblichen Verbindungsaufbaues von der Fernschreib- und Datenvermittlungsanlage her zugeführt bekommen haben.

Für den vorgenannten Fall wird beispielsweise von dem in der Zeichnung mit Tx bezeichneten Telex-Endgerät ausgehend eine Verbindung zu dem Teletex-Endgerät Ttx1 hergestellt. Die hierzu erforderlichen Kommunikationen zwischen dem Telex-Endgerät Tx und der Fernschreib- und Datenvermittlungsanlage EDS werden entsprechend den Kriterien der Teilnehmersignalisierung für Telex-Teilnehmerstellen durchgeführt. Aus den im Zuge des Verbindungsaufbaus von dem Telex-Endgerät her übertragenen Wählzeichen geht dabei hervor, daß eine Verbindung zu einem Teletex-Endgerät gewünscht ist, d.h. daß eine Umsetzung der Übertragungsprozedur mit Hilfe der Signalbehandlungseinrichtung SBE vorzunehmen ist. Derartige Wählzeichen werden in der Fernschreib- und Datenvermittlungsanlage als solche erkannt.

Bei Erkennen von Verbindungswünschen zu der Signalbehandlungseinrichtung SBE hin belegt die Fernschreib-Datenvermittlungsanlage EDS einen bis dahin freien Übertragungskanal der Signalbehandlungseinrichtung. Nach dieser Belegung leitet dann die Fernschreib- und Datenvermittlungsanlage EDS die für den weiteren Verbindungsaufbau erforderlichen Signalisierungsinformationen (z.B. Wahlinformationen) über diesen Übertragungskanal an die Signalbehandlungseinrichtung SBE weiter. Das Weiterleiten solcher Signalisierungsinformationen erfolgt dabei nach den Kriterien einer Zwischenamtssignalisierung für den Telexverkehr.

Nach der Übernahme der genannten Signalisierungsinformationen wird von der Signalbehandlungseinrichtung her, d.h. von dem Mikroprozessor MP her, überprüft, ob das von dem Telex-Endgerät Tx her als Empfänger ausgewählte Teletex-Endgerät Ttx1 erreichbar ist. Hierzu wird von dem Mikroprozessor MP kurzzeitig über einen freien Übertragungskanal eine Verbindung zu dem Teletex-Endgerät Ttx1 hin aufgebaut. Nach dem Verbindungsaufbau werden in der Signalbehandlungseinrichtung bereitstehende Uhrzeit- und /oder Datumsangaben an dieses Teletex-Endgerät weitergeleitet. Daran schließt sich noch ein Austausch der Kennungen der Signalbehandlungseinrichtung SBE und des Teletex-Endgerätes Ttx1 an. Dieser Austausch dient dabei lediglich zur Überprüfung der Erreichbarkeit des ausgewählten Teletex-Endgerätes. Nach diesem Austausch wird dann die bestehende Verbindung zunächst wieder abgebaut. Es sei hierzu angemerkt, daß die für einen Verbindungsaufbau zwischen der Signalbehandlungseinrichtung und der Fernschreib- und Datenvermittlungsanlage EDS bzw. zwischen der Fernschreib- und Datenvermittlungsanlage und dem Teletex-Endgerät Ttx1 erforderlichen Kommunikationen nach den Kriterien der CCITT-Empfehlung X.71 bzw. X.21 erfolgen.

Erst nach erfolgtem Abbau der Verbindung zwischen der Signalbehandlungseinrichtung SBE und dem Teletex-Endgerät Ttx1 wird die zuvor von dem Telex-Endgerät Tx eingeleitete Verbindung zu der Signalbehandlungseinrichtung hin endgültig hergestellt. Daran schließt sich dann die Übertragung der von dem Telex-Endgerät her abzugebenden Datensignale zu der Signalbehandlungseinrichtung hin an.

Die von der Signalbehandlungseinrichtung SBE empfangenen Datensignale (Telexsignale) werden in einen dem für die Signalübertragung benutzten Übertragungskanal von dem Mikroprozessor MP her wahlfrei zugeordneten Speicherbereich des Arbeitsspeichers RAM übernommen. Danach veranlaßt der Mikroprozessor MP, eine erneute Verbindung über einen freien Übertragungskanal zu dem Teletex-Endgerät Ttxl hin aufzubauen.

Nach einem erfolgreichen Verbindungsaufbau werden dann die in einem Speicherbereich des Arbeitsspeichers RAM der Signalbehandlungseinrichtung gespeicherten, von dem Telex-Endgerät Tx abgegebenen Datensignale ausgelesen und von dem Mikroprozessor MP in von Teletex-Endgeräten verarbeitbare Datensignale umgesetzt, die über die gerade aufgebaute Verbindung zu dem Teletex-Endgerät Ttxl hin übertragen werden. Dabei werden von dem Mikroprozessor MP her den umgesetzten Datensignalen Uhrzeit- und /oder Datumsangaben vorangestellt. Nach der Übermittlung der Datensignale einschließlich der Uhrzeit- und/oder Datumsangaben werden schließlich die zwischen der Signalbehandlungseinrichtung SBE und dem Telex-Endgerät Tx bzw. dem Teletex-Endgerät Ttx1 bestehenden Verbindungen in bekannter Weise nach den Kriterien der dafür in Frage kommenden Signalisierungsprozedur abgebaut.

Vorstehend wurde in einem groben Überblick die Arbeitsweise der Signalbehandlungseinrichtung SBE am Beispiel eines Signalumsetzers erläutert. Wie bereits oben erwähnt, kann es sich aber auch bei der Signalbehandlungseinrichtung beispielsweise um eine Rundsendeeinrichtung oder auch um eine Einrichtung für den elektronischen Briefdienst handeln. Auch bei derartigen Einrichtungen laufen den gerade erläuterten Verfahrensschritten entsprechende Verfahrensschritte ab, wenn in den genannten Einrichtungen auch eine Signalumsetzung vorgenommen wird. In diesem Fall unterscheidet sich beispielsweise eine Rundsendeeinrichtung von einem Signalumsetzer lediglich dadurch, daß die von einem Telex-Endgerät abgegebenen Datensignale nach einer entsprechenden Umsetzung von der Signalbehandlungseinrichtung her an eine Mehrzahl von Teletex-Endgeräten, z.B. an die Endgeräte Ttx1 und Ttxr, weitergeleitet werden. Eine Einrichtung für den elektronischen Briefdienst (Mail-Box) unterscheidet sich von einem Signalumsetzer dagegen dadurch, daß die in die Einrichtung übernommenen Datensignale nach einer Umsetzung nicht automatisch an den in Frage kommenden Empfänger weitergeleitet werden. Vielmehr bleiben diese Datensignale bis zum Abruf durch beispielsweise ein Teletex-Endgerät in der Einrichtung für den elektronischen Briefdienst gespeichert.

In der Zeichnung ist lediglich als Beispiel angegeben, daß die Übertragungskanäle K1 bis Kn der Signalbehandlungseinrichtung SBE jeweils mit zwei zu unterschiedlichen Gruppen von Anschlußschaltungen gehörenden Anschlußschaltungen der Fernschreib- und Datenvermittlungsanlage verbunden sind. Im Falle einer Rundsendeeinrichtung bzw. einer Einrichtung für den elektronischen Briefdienst können die Übertragungskanäle aber auch lediglich mit einer der Gruppen von Anschlußschaltungen verbunden sein. Die Signalbehandlung bei einer Rundsendeeinrichtung würde dann darin bestehen, daß von einem Teilnehmer-Endgerät her abgegebene Datensignale ohne Umsetzung zu einer Mehrzahl von als Empfänger ausgewählten Teilnehmer-Endgeräten hin übertragen werden.

Bei einer Einrichtung für den elektronischen Briefdienst liefe der gerade angegebene Anschluß an die Fernschreib- und Datenvermittlungsanlage dagegen darauf hinaus, daß die Datensignalhinterlegung und der Abruf von Datensignalen nur durch Teilnehmer-Endgeräte erfolgen kann, die an ein und dieselbe Gruppe von Anschlußschaltungen angeschlossen sind. Dabei können sowohl in einer Rundsendeeinrichtung als auch in einer Einrichtung für den elektronischen Briefdienst Uhrzeit- und/oder Datumsangaben bereitgestellt werden, die zusammen mit den weiterzuleitenden Datensignalen übertragen werden.

Unabhängig davon, um welche Art von Signalbehandlungseinrichtung es sich im einzelnen handelt, sind in der Signalbehandlungseinrichtung für die Bereitstellung der genannten Uhrzeit- und/oder Datumsangaben Speicherzellen vorgesehen, deren Inhalte ständig durch den Mikroprozessor MP aktualisiert werden. Bei den Speicherzellen kann es sich dabei entweder um Registerzellen des Mikroprozessors oder um Speicherzellen des Arbeitsspeichers RAM handeln. Die Inhalte dieser Speicherzellen werden von dem Mikroprozessor MP immer dann ausgelesen, wenn den von der Signalbehandlungseinrichtung weiterzuleitenden Datensignalen Uhrzeit- und/oder Datumsangaben voranzustellen sind.

Für eine Synchronisierung der in der Signalbehandlungseinrichtung bereitstehenden Uhrzeit- und/oder Datumsangaben und der in der Fernschreib- und Datenvermittlungsanlage EDS bereitstehenden entsprechenden Angaben ist nun vorgesehen, daß die in der Fernschreib- und Datenvermittlungsanlage bereitstehenden Uhrzeit- und/oder Datumsangaben über einen von den Übertragungskanälen K1 bis Kn verschiedenen Sonderkanal im Zuge wenigstens einer gesonderten Verbindung zu der Signalbehandlungseinrichtung hin übertragen werden. Der Sonderkanal verläuft dabei, wie in der Zeichnung dargestellt, beispielsweise über die Schnittstellenschaltung USART der Signalbehandlungseinrichtung und über die Anschlußschaltung SAGD2 der Fernschreib - und Datenvermittlungsanlage.

Eine Verbindung über den Sonderkanal für eine Übertragung von Uhrzeit- und/oder Datumsangaben kann sowohl von der Fernschreib- und Datenvermittlungsanlage EDS als auch von der Signalbehandlungseinrichtung SBE her aufgebaut werden. So ist beispielsweise vorgesehen, daß in der Fernschreib- und Datenvermittlungsanlage in vorgegebenen Zeitabständen Steuerungsvorgänge für den Aufbau von Verbindungen über den Sonderkanal aktiviert werden. Im Zuge dieser Verbindungen werden dann jeweils die in der Fernschreib- und Datenvermittlungsanlage bereitstehenden aktuellen Uhrzeit- und/oder Datumsangaben zu der Signalbehandlungseinrichtung SBE hin übertragen. Diese übernimmt dann die aktuelle Angaben in die für diese Angaben vorgesehenen Speicherzellen. Die bis dahin in diesen Speicherzellen gespeicherten Angaben werden dabei überschrieben. Die nunmehr aktuellen Angaben werden dann von dem Mikroprozessor MP der Signalbehandlungseinrichtung beispielsweise in einem Sekundenraster inkrementiert.

Der zeitliche Abstand zwischen zwei aufeinanderfolgenden Verbindungen, deren Aufbau im übrigen wieder unter Anwendung einer Signalisierungsprozedur gemäß einer der CCTT-Empfehlungen X.71 und X.21 erfolgen kann, ist zweckmäßigereise so gewählt, daß die in der Signalbehandlungseinrichtung bereitstehenden Uhrzeit- und/oder Datumsangaben mindestens einmal pro Tag aktualisiert werden.

Unabhängig von der gerade erläuterten periodischen Aktualisierung der in der Signalbehandlungseinrichtung SBE bereitstehenden Angaben von der Fernschreib- und Datenvermittlungsanlage her ist vorgesehen, daß auch in der Signalbehandlungseinrichtung Steuerungsvorgänge für den Aufbau einer Verbindung über den Sonderkanal aktiviert werden können. Ein derartiger Aufbau wird beispielsweise immer dann veranlaßt, wenn in der Signalbehandlungseinrichtung die Uhrzeit- und/oder Datumsangaben beeinflussende Störungen aufgetreten sind. Auch in diesem Falle wird eine entsprechende Aktualisierung in der oben angegebenen Weise durchgeführt.

Die Übertragung von Uhrzeit- und/oder Datumsangaben zu der Signalbehandlungseinrichtung SBE hin kann entweder bereits im Zuge des Aufbaus der jeweiligen Verbindung in Form von Dienstsignalen oder aber auch erst nach dem Aufbau der jeweiligen Verbindung während der Datenübertragungsphase erfolgen. Die Wahl des Übertragungszeitpunktes hängt von der Datenmenge ab, die jeweils zu übertragen ist. Bestehen die gerade erwähnten Angaben lediglich aus einer geringen Datenmenge, so ist es vorteilhaft, diese in Form von Dienstsignalen im Zuge des Verbindungsaufbaus zu übertragen. Auf diese Weise kann durch Bewertung der Dienstsignale in der Signalbehandlungseinrichtung die für eine Signalübertragung erforderliche Verbindungsdauer gering gehalten werden. Treten dagegen die Uhrzeit- und/oder Datumsangaben in Form von größeren Datenmengen auf, so erfolgt die Übertragung zweckmäßigerweise während der eigentlichen Datenübertragungsphase der jeweiligen Verbindung.

Vorstehend wurde lediglich der Fall betrachtet, daß Uhrzeit- und/oder Datumsangaben über einen von den Übertragungskanälen K1 bis Kn verschiedenen Sonderkanal übertragen werden. Dies bringt den Vorteil mit sich, daß die Übertragungskanäle ausschließlich für die Übertragung von zu behandelnden Datensignalen zur Verfügung stehen. Es ist jedoch auch möglich, einen gerade nicht in eine Übertragung von Datensignalen einbezogenen Übertragungskanal für die Dauer der Übertragung von Uhrzeit- und/oder Datumsangaben als Sonderkanal zu benutzen. Auch in diesem Fall tritt durch diese Übertragung keine Erhöhung der Belegungsdauer der in Datensignalübertragungen einbezogenen Übertragungsskanäle auf. Die Benutzung eines Übertragungskanals als Sonderkanal bringt jedoch den Vorteil mit sich, daß für den Sonderkanal kein zusätzlicher schaltungstechnischer Aufwand erforderlich ist.

**Ansprüche**

1. Verfahren zum Übertragen von in einer Fernschreib- und Datenvermittlungsanlage (EDS) bereitstehenden Uhrzeit und/oder Datumsangaben zu einer mit dieser über eine Anzahl von Übertragungskanälen (K1 bis Kn) verbundenen Signalbehandlungseinrichtung (SBE) hin, **dadurch gekennzeichnet,** daß die Uhrzeit- und/oder Datumsangaben über einen ggf.von den Übertragungskanälen (K1 bis Kn) verschiedenen Sonderkanal (USART) im Zuge wenigstens einer gesonderten Verbindung zu der Signalbehandlungseinrichtung hin übertragen werden.

2. Verfahren nach Anspruch 1, **dadurch gekennzeichnet,** daß für eine Aktualisierung der in der Signalbehandlungseinrichtung (SBE) bereitstehenden Uhrzeit- und/oder Datumsangaben von dieser Signalbehandlungseinrichtung her eine gesonderte Verbindung über den Sonderkanal aufgebaut wird.

3. Verfahren nach Anspruch 1, **dadurch gekennzeichnet,** daß für die Abgabe von Uhrzeit- und/oder Datumsangaben von der Fernschreib- und Datenvermittlungsanlage (EDS) her in vorgegebenen Zeitabständen gesonderte Verbindungen über den Sonderkanal aufgebaut werden.

4. Verfahren nach einem der Ansprüche 1 bis 3, **dadurch gekennzeichnet,** daß die Uhrzeit- und/oder Datumsangaben im Zuge des Verbindungsaufbaus als Dienstsignale übertragen werden.

5. Verfahren nach einem der Ansprüche 1 bis 3, **dadurch gekennzeichnet,** daß die Uhrzeit- und/oder Datumsangaben während der Datenübertragungsphase der jweiligen Verbindung übertragen werden.

0 192 079